# EUROPEAN PATENT APPLICATION

(11) **EP 3 115 921 A1**
(43) Date of publication of application: **11.01.2017**
(21) Application number: 14884832.8
(22) Date of filing: 19.05.2014
(51) Int. Cl.: G06F 21/74, G06F 21/85, G06F 12/14

(54) **METHOD AND DEVICE FOR SECURE ACCESS CONTROL BASED ON ON-CHIP BUS PROTOCOL**

(30) Priority: 04.03.2014 CN 201410077578
(71) Applicant: Zhongxing Microelectronics Technology Co., Ltd., Shenzhen, Guangdong 518085 (CN)
(72) Inventor: LIU, Wei, Nanshan District Shenzhen (CN)
(74) Representative: Brevalex
(86) International application number: PCT/CN2014/077836
(87) International publication number: WO 2015/131446

(57) **Abstract**

A method for secure access control based on an on-chip bus (advanced eXtensible interface, AXI) protocol is disclosed and comprises dividing a bus address space into more than one area, then determining the security attributes of each area; and, determining whether the security type of an access request, sent by a primary device, to access a target area matches the security attributes of said target area; if a match, sending said access request to a target secondary device. A device for secure access control based on the AXI protocol is also disclosed.

## Description

### TECHNICAL FIELD

The disclosure relates to a bus control technology, and in particular to an Advanced eXtensible Interface (AXI)-protocol-based security access control method and device.

### BACKGROUND

In an AXI protocol, master equipment usually indicates a security type of its read request or write request through a read address channel signal ARPROT or a write address channel signal AWPROT, and a read request or a write request is usually divided into a security type or a non-security type.

At present, in a system on chip without a security application requirement, slave equipment may usually ignore received ARPROT or AWPROT. That is, no matter whether an access request from master equipment is of a security type or a non-security type, the slave equipment may normally receive the access request and perform read and/or write operation according to the access request. In contrast, in a system on chip with a security application requirement, for protecting data in some bus address spaces from being acquired or rewritten by any master equipment in a non-security manner, the system on chip makes such a requirement that the master equipment must provide an effective security type indication through AWPROT/ARPROT when sending any access request. Then slave equipment returns an appropriate response to the master equipment sending the access request by following an AXI protocol, and meanwhile, the slave equipment is not allowed to ignore the security type indication sent by the master equipment so as to prevent data in a security area from being acquired or rewritten by a non-security access request.

According to the requirement, the slave equipment in the system on chip with the security application requirement must: for read operation, normally return read data to the master equipment in case of a legal access request and return all-0 data to the master equipment in case of an illegal access request; and for write operation, normally receive write data and update a destination address space in case of a legal access request, and normally receive the write data from the master equipment but not update the destination address space with the write data in case of an illegal access request. However, a system on chip usually has massive slave equipments, so that each of the slave equipments in the system on chip with the security application requirement is required to have a function of judging whether an access request from master equipment is legal or not.

In addition, if slave equipment in a designed system on chip without a security application requirement is applied to a system on chip with a security application requirement, it is necessary to make necessary modification to the slave equipment to enable the slave equipment to check a security type of an access request sent by master equipment to prevent data in a security area from being irrationally acquired or rewritten and return an appropriate response to the master equipment. However, there usually exists massive slave equipments of different types in a system on chip, and modifying the slave equipment one by one is very tedious and also easily causes an error.

### SUMMARY

In view of this, the embodiment of the disclosure is intended to provide an AXI-protocol-based security access control method and device.

The embodiment of the disclosure provides an AXI-protocol-based security access control method, which may include that:
a bus address space is divided into one or more areas, and security attribute of each of the one or more areas is determined; and whether a security type of an access request for accessing a target area, which is sent by a master equipment, is matched with the security attribute of the target area or not is judged, and if the security type of the access request is matched with the security attribute of the target area, the access request is sent to a target slave equipment.

In the solution, the step that the security attribute of each of the one or more areas is determined may include that:
whether each of the one or more areas supports access of a security type or access of a non-security type is determined.

In the solution, after the step that the security attribute of each of the one or more areas is determined, the method may further include that:
size of each of the one or more areas is determined, and when each of the one or more areas receives an access request of which a security type is mismatched with the security attribute of the area, whether an interrupt is required to be issued or not and whether an address and Identifier (ID) of the access request are required to be recorded or not are determined.

In the solution, the step that whether the security type of the access request for accessing the target area, which is sent by the master equipment, is matched with the security attribute of the target area or not is judged may include that:
when the security attribute of the target area is an attribute in which access of a security type is supported and the access request sent by the master equipment is an access request of a security type, it is determined that the security type of the access request is matched with the security attribute of the target area; or
when the security attribute of the target area is an attribute in which access of a security type is supported and the access request sent by the master equipment is an access request of a non-security type, it is determined that the security type of the access request is mismatched with the security attribute of the target area; or
when the security attribute of the target area is an attribute in which access of a non-security type is supported and the access request sent by the master equipment is of a security type or a non-security type, it is determined that the security type of the access request is matched with the security attribute of the target area.

In the solution, the method may further include that:
when the security type of the access request for accessing the target area, which is sent by the master equipment, is mismatched with the security attribute of the target area, error response information is generated and sent to the master equipment, and the access request is not sent to the target slave equipment.

In the solution, when it is determined that the interrupt is required to be issued and the address and ID of the access request are required to be recorded when each of the one or more areas receives the access request of which the security type is mismatched with the security attribute of the area, the method may further include that:
when it is determined that the security type of the access request for accessing the target area, which is sent by the master equipment, is mismatched with the security attribute of the target area, an interrupt is issued to the master equipment, and an address and ID of the access request are recorded.

The embodiment of the disclosure further provides an AXI-protocol-based security access control device, which may include: an area division module, a matching module and an information forwarding module, wherein
the area division module may be configured to divide a bus address space into one or more areas, and determine security attribute of each of the one or more areas;
the matching module may be configured to judge whether a security type of an access request for accessing a target area, which is sent by a master equipment, is matched with the security attribute of the target area or not, and if the security type of the access request is matched with the security attribute of the target area, trigger the information forwarding module; and
the information forwarding module may be configured to, when being triggered by the matching module, send the access request to a target slave equipment.

In the device, the operation that the security attribute of each of the one or more areas is determined may include that:
whether each of the one or more areas supports access of a security type or access of a non-security type is determined.

In the device, the area division module may further be configured to determine size of each of the one or more areas, and when each of the one or more areas receives an access request of which a security type is mismatched with the security attribute of the area, determine whether an interrupt is required to be issued or not and whether an address and ID of the access request are required to be recorded or not.

In the device, the operation that the matching module judges whether the security type of the access request for accessing the target area, which is sent by the master equipment, is matched with the security attribute of the target area or not may include that:
when the security attribute of the target area is an attribute in which access of a security type is supported and the access request sent by the master equipment is an access request of a security type, it is determined that the security type of the access request is matched with the security attribute of the target area; or
when the security attribute of the target area is an attribute in which access of a security type is supported and the access request sent by the master equipment is an access request of a non-security type, it is determined that the security type of the access request is mismatched with the security attribute of the target area; or
when the security attribute of the target area is an attribute in which access of a non-security type is supported and the access request sent by the master equipment is of a security type or a non-security type, it is determined that the security type of the access request is matched with the security attribute of the target area.

The device may further include an alarming module configured to, when the security type of the access request for accessing the target area, which is sent by the master equipment, is mismatched with the security attribute of the target area, generate error response information and send the error response information to the master equipment through the information forwarding module.

In the solution, the device may further include an interrupt processing module configured to, when it is determined that the interrupt is required to be issued and the address and ID of the access request are required to be recorded when each of the one or more areas receives the access request of which the security type is mismatched with the security attribute of the area and it is determined that the security type of the access request for accessing the target area, which is sent by the master equipment, is mismatched with the security attribute of the target area, issue an interrupt to the master equipment, and record an address and ID of the access request.

The embodiment of the disclosure further provides a computer storage medium, which may include a set of instructions that when executed may cause at least one processor to perform the abovementioned AXI-protocol-based security access control method.

According to the AXI-protocol-based security access control method and device provided in the embodiment of the disclosure, the bus address space is divided into the one or more areas, and the security attribute of each of the one or more areas is determined; whether the security type of the access request for accessing the target area, which is sent by the master equipment, is matched with the security attribute of the target area or not is judged, and if the security type of the access request is matched with the security attribute of the target area, the access request is sent to the target slave equipment. In such a manner, access requests sent by the master equipment may be filtered, and only access requests, of which security types are matched with the security attribute of the target area, sent by the master equipment are sent to the slave equipment. Thus, operation contents of the slave equipment are greatly simplified. In addition, when slave equipments in a system on chip without a security application requirement is applied to a system on chip with a security application requirement, it is also unnecessary to modify the slave equipments one by one.

### BRIEF DESCRIPTION OF THE DRAWINGS

Fig. 1 is a flowchart of an AXI-protocol-based security access control method according to an embodiment of the disclosure; and
Fig. 2 is a diagram of a basic structure an AXI-protocol-based security access control device according to an embodiment of the disclosure.

### DETAILED DESCRIPTION

In various embodiments of the disclosure: a bus address space is divided into one or more areas, and security attribute of each of the one or more areas is determined; whether a security type of an access request for accessing a target area, which is sent by a master equipment, is matched with the security attribute of the target area or not is judged, and if the security type of the access request is matched with the security attribute of the target area, the access request is sent to a target slave equipment.

The disclosure will be further described in detail below with reference to the drawings and specific embodiments.

### Embodiment 1

A system on chip in the embodiment of the disclosure includes two kinds of equipments, a master equipment and a slave equipment, wherein the master equipment refers to an equipment capable of actively sending read and write commands in the system on chip, for example: a processor and a Direct Memory Access (DMA) module; and the slave equipment refers to an equipment which can not actively send read and write commands but only passively receive the read and write commands in the system on chip, for example, a memory and a peripheral controller.

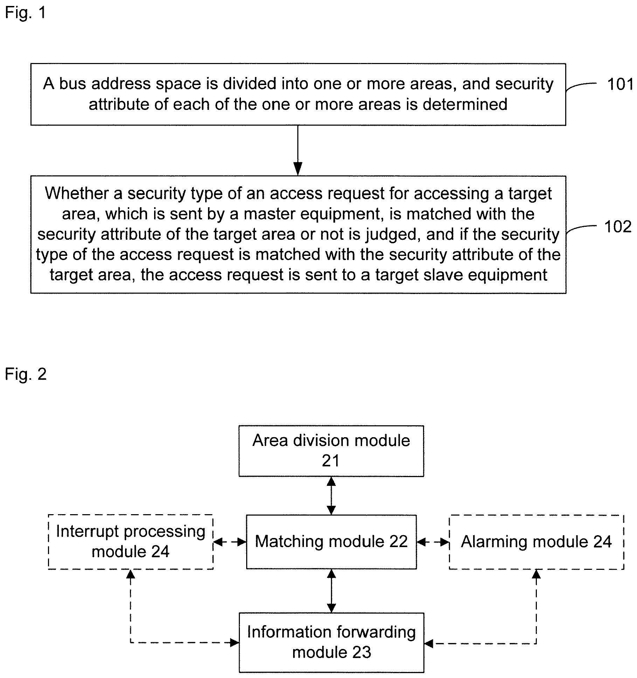

Embodiment 1 of the disclosure provides an AXI-protocol-based security access control method, and as shown in Fig. 1, the method includes the following steps.

Step 101: a bus address space is divided into one or more areas, and security attribute of each of the one or more areas is determined.

In the step, the bus address space in the system on chip may be divided into the one or more areas according to a practical requirement of a user, and the security attribute of each of the one or more areas may be set according to a requirement, that is, whether each of the one or more areas supports access of a security type or access of a non-security type is determined. For example, a bus address space of a system on chip is 32k, and if information required to be stored in the bus address space by user A is all sensitive information, the sensitive information referring to information forbidden to be freely modified and acquired by illegal means, it is only necessary to divide the whole bus address space into a 32k area and set a security attribute of the area to be an attribute in which access of a security type is supported. In the same 32 bus address space, if sensitive information required to be stored by user B is divided into three types, 5k, 3k and 7k address spaces are required to be reserved for the three types of sensitive information respectively, other insensitive information required to be stored by user B is divided into four types and 3k, 4k, 5k and 5k address spaces are required to be reserved for the four types of insensitive information respectively, the bus address space may be divided into seven areas, In such case, three areas configured to store the sensitive information are required to be set to support access of a security type, and four areas configured to store the insensitive information are required to be set to support access of a non-security type.

Furthermore, when the bus address space is divided, characteristics such as size of each area and, when each area receives an access request of which a security type is mismatched with the security attribute of the area, whether an interrupt is required to be issued or not and whether an address and ID of the access request are required to be recorded or not may also be set according to the practical requirement of the user.

Step 102: whether a security type of an access request for accessing a target area, which is sent by a master equipment, is matched with the security attribute of the target area or not is judged, and if the security type of the access request is matched with the security attribute of the target area, the access request is sent to a target slave equipment.

Here, the slave equipment usually occupies a segment of address space in the bus address space, and thus the segment of address space mentioned here may correspond to one or more of the areas as divided in Step 101 in the embodiment of the disclosure. And the master equipment usually accesses the target area through the slave equipment. That is, the master equipment sends an access request to the slave equipment. Then the slave equipment performs read and/or write operation on the corresponding target area occupied by it according to the access request after receiving the access request. Here, the access request sent to the slave equipment by the master equipment may be a read/write request.

In the step, the system on chip judges whether the security type of the access request for accessing the target area, which is sent by the master equipment, is matched with the security attribute of the target area or not, and executes subsequent operation according to a judgement result. Here, subsequent operation at least includes that: the system on chip sends the access request to the target slave equipment, or the system on chip does not send the access request but only returns an error message to the master equipment.

Specifically, when the security attribute of the target area is an attribute in which access of a security type is supported and the access request sent by the master equipment is an access request of a security type, it is determined that the security type of the access request is matched with the security attribute of the target area. At this moment, for read operation, the system on chip may directly receive the read request and send the read request to the target slave equipment, and then the target slave equipment performs read operation on a corresponding area occupied by it; furthermore, the system on chip may receive read data and read response returned by the target slave equipment after read operation is finished, and forwards the read data and the read response to the master equipment. For write operation, the system on chip directly receives the write request, and forwards the write request to the target slave equipment, and then the target slave equipment performs write operation on the corresponding area occupied by it; and furthermore, the system on chip may receive a write response returned by the target slave equipment after write operation is finished, and forwards the write response to the master equipment.

When the security attribute of the target area is an attribute in which access of a non-security type is supported, no matter whether the access request sent by the master equipment is of a security type or a non-security type, the security type of the access request is matched with the security attribute of the target area. At this moment, for read operation, the system on chip may directly receive the read request and send the read request to the target slave equipment, and then the target slave equipment performs read operation on the corresponding area occupied by it; furthermore, the system on chip may receive read data and read response returned by the target slave equipment after read operation is finished, and forwards the read data and the read response to the master equipment. For write operation, the system on chip directly receives the write request, and forwards the write request to the target slave equipment, and then the target slave equipment performs write operation on the corresponding area occupied by it; and furthermore, the system on chip may receive a write response returned by the target slave equipment after write operation is finished, and forwards the write response to the master equipment.

Correspondingly, when the security attribute of the target area is an attribute in which access of a security type is supported and the access request for accessing the target area, which is sent by the master equipment, is of a non-security type, it is determined that the security type of the access request is mismatched with the security attribute of the target area. At this moment, for read operation or write operation, the system on chip directly receives the read request or the write request, and does not send the read request or the write request to the target slave equipment.

Furthermore, when the security type of the received access request is mismatched with the security attribute of the target area, the system on chip may further generate and send error response information to the master equipment. Specifically, when the access request is a read request, the generated error response information includes, error read data, which may be read data of which a value is 0, and an error read response message, which is configured to indicate generation of an error. Here, a value of the error read response message may be set according to a practical requirement. For example, a response message of which a value is 01 may be determined as the error read response message. When the access request is a write request, the generated error response information includes an error write response message which is configured to indicate generation of an error. Here, the value of the error write response message may be set according to a practical requirement. For example, a response message of which a value is 00 may be determined as the error write response message.

Furthermore, if it is preset that when the target area receives an access request of which a security type is mismatched with the security attribute of the area, an interrupt is required to be issued and an address and ID of the access request are required to be recorded, the system on chip issues an interrupt to the master equipment, and records an address and ID of the access request.

### Embodiment 2

Embodiment 2 of the disclosure provides an AXI-protocol-based security access control device, and as shown in Fig. 2, the device includes an area division module 21, a matching module 22 and an information forwarding module 23.

The area division module 21 is configured to divide a bus address space into one or more areas, and determine security attribute of each of the one or more areas.

Specifically, the area division module 21 may divide the bus address space into the one or more areas according to a practical requirement of a user, and determines the security attribute of each of the one or more areas, that is, whether each of the one or more areas supports access of a security type or access of a non-security type is determined.

Furthermore, when dividing the bus address space, the area division module 21 may further set characteristics such as size of each of the one or more areas and, when each of the one or more areas receives an access request of which a security type is mismatched with the security attribute of the area, whether an interrupt is required to be issued or not and whether an address and ID of the access request are required to be recorded or not, according to the practical requirement of the user.

The matching module 22 is configured to judge whether a security type of an access request for accessing a target area, which is sent by a master equipment, is matched with the security attribute of the target area or not, and if the security type of the access request is matched with the security attribute of the target area, trigger the information forwarding module 23.

The information forwarding module 23 is configured to, when being triggered by the matching module 22, send the access request to a target slave equipment.

Specifically, when the security attribute of the target area is an attribute in which access of a security type is supported and the access request sent by the master equipment is an access request of a security type, the matching module 22 determines that the security type of the access request is matched with the security attribute of the target area. At this moment, for read operation, the read request may be directly received, the information forwarding module 23 sends the read request to the target slave equipment, and then the target slave equipment performs read operation on a corresponding area occupied by it; furthermore, the information forwarding module 23 may receive read data and read response returned by the target slave equipment after read operation is finished, and forwards the read data and the read response to the master equipment. For write operation, the information forwarding module 23 directly receives the write request, and forwards the write request to the target slave equipment, and then the target slave equipment performs write operation on the corresponding area occupied by it; and furthermore, the information forwarding module 23 may receive a write response returned by the target slave equipment after write operation is finished, and forwards the write response to the master equipment.

When the security attribute of the target area is an attribute in which access of a non-security type is supported, no matter whether the access request sent by the master equipment is of a security type or a non-security type, the security type of the access request is matched with the security attribute of the target area. At this moment, for read operation, the information forwarding module 23 may directly forward the received read request to the target slave equipment, and then the target slave equipment performs read operation on the corresponding area occupied by it; furthermore, the information forwarding module 23 may receive read data and read response returned by the target slave equipment after read operation is finished, and forwards the read data and the read response to the master equipment. For write operation, the write request is directly received, the information forwarding module 23 forwards the write request to the target slave equipment, and then the target slave equipment performs write operation on the corresponding area occupied by it; and furthermore, a write response returned by the target slave equipment is received after write operation is finished, and the write response is forwarded to the master equipment.

Correspondingly, when the security attribute of the target area is an attribute in which access of a security type is supported and the access request for accessing the target area, which is sent by the master equipment, is of a non-security type, the matching module 22 determines that the security type of the access request is mismatched with the security attribute of the target area. At this moment, for read operation or write operation, the information forwarding module 23 directly receives the read request or the write request, and does not send the read request or the write request to the target slave equipment.

Furthermore, the device further includes an alarming module 2, configured to, when the security type of the received access request is mismatched with the security attribute of the target area, generate error response information and send the error response information to the master equipment through the information forwarding module 23. Specifically, when the access request is a read request, the generated error response information includes error read data which may be read data of which a value is 0, and an error read response message which is configured to indicate generation of an error. Here, a value of the error read response message may be set according to a practical requirement For example, a response message of which a value is 01 may be determined as the error read response message. When the access request is a write request, the generated error response information includes an error write response message which is configured to indicate generation of an error. Here, the value of the error write response message may be set according to a practical requirement. For example, a response message of which a value is 00 may be determined as the error write response message.

Furthermore, the device further includes an interrupt processing module 25, which is configured to, if it is preset that when the target area receives an access request of which a security type is mismatched with the security attribute of the target area, an interrupt is required to be issued and an address and ID of the access request are required to be recorded, when being triggered under the condition that the security type of the received access request is mismatched with the security attribute of the target area, issue an interrupt to the master equipment, and record an address and ID of the access request.

### Embodiment 3

Embodiment 3 of the disclosure provides a system on chip, which includes a master equipment, a slave equipment and the AXI-protocol-based security access control device in embodiment 2.

During a practical application, all of the area division module 21, the matching module 22, the information forwarding module 23, the alarming module 24 and the interrupt processing module 25 may be implemented by an Application Specific Integrated Circuit (ASIC) or Field-Programmable Gate Array (FPGA) in the system on chip.

Those skilled in the art should understand that the embodiment of the disclosure may be provided as a method, a system or a computer program product. Therefore, the disclosure may adopt a form of hardware embodiment, software embodiment or combined software and hardware embodiment. Moreover, the disclosure may adopt a form of computer program product implemented on one or more computer-available storage media containing computer-available program codes, including, but not limited to, a magnetic disk memory, an optical memory and the like.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to operate in a specific manner, so that a product including an instruction device may be generated by the instructions stored in the computer-readable memory, the instruction device realizing the function specified in one or more flows in the flowcharts and/or one or more blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

## Claims

1. An Advanced eXtensible Interface (AXI)-protocol-based security access control method, comprising:
dividing a bus address space into one or more areas, and determining security attribute of each of the one or more areas; and
judging whether a security type of an access request for accessing a target area, which is sent by a master equipment, is matched with the security attribute of the target area or not, and if the security type of the access request is matched with the security attribute of the target area, sending the access request to a target slave equipment.

2. The method according to claim 1, wherein determining the security attribute of each of the one or more areas comprises:
determining whether each of the one or more areas supports access of a security type or access of a non-security type.

3. The method according to claim 1, wherein after determining the security attribute of each of the one or more areas, the method further comprises:
determining size of each of the one or more areas, and when each of the one or more areas receives an access request of which a security type is mismatched with the security attribute of the area, determining whether an interrupt is required to be issued or not and whether an address and Identifier (ID) of the access request are required to be recorded or not.

4. The method according to claim 1, wherein judging whether the security type of the access request for accessing the target area, which is sent by the master equipment, is matched with the security attribute of the target area or not comprises:
when the security attribute of the target area is an attribute in which access of a security type is supported and the access request sent by the master equipment is an access request of a security type, determining that the security type of the access request is matched with the security attribute of the target area; or
when the security attribute of the target area is an attribute in which access of a security type is supported and the access request sent by the master equipment is an access request of a non-security type, determining that the security type of the access request is mismatched with the security attribute of the target area; or
when the security attribute of the target area is an attribute in which access of a non-security type is supported and the access request sent by the master equipment is of a security type or a non-security type, determining that the security type of the access request is matched with the security attribute of the target area.

5. The method according to claim 4, further comprising:
when the security type of the access request for accessing the target area, which is sent by the master equipment, is mismatched with the security attribute of the target area, generating and sending error response information to the master equipment, and not sending the access request to the target slave equipment.

6. The method according to claim 3, wherein when determining that the interrupt is required to be issued and the address and ID of the access request are required to be recorded when each of the one or more areas receives the access request of which the security type is mismatched with the security attribute of the area, the method further comprising:
when determining that the security type of the access request for accessing the target area, which is sent by the master equipment, is mismatched with the security attribute of the target area, issuing an interrupt to the master equipment, and recording an address and ID of the access request.

7. An Advanced eXtensible Interface (AXI)-protocol-based security access control device, comprising an area division module, a matching module and an information forwarding module, wherein
the area division module is configured to divide a bus address space into one or more areas, and determine security attribute of each of the one or more areas;
the matching module is configured to judge whether a security type of an access request for accessing a target area, which is sent by master equipment, is matched with the security attribute of the target area or not, and if the security type of the access request is matched with the security attribute of the target area, trigger the information forwarding module; and
the information forwarding module is configured to, when being triggered by the matching module, send the access request to a target slave equipment.

8. The device according to claim 7, wherein the operation of determining the security attribute of each of the one or more areas comprises:
determining whether each of the one or more areas supports access of a security type or access of a non-security type.

9. The device according to claim 7, wherein the area division module is further configured to determine size of each of the one or more areas, and when each of the one or more areas receives an access request of which a security type is mismatched with the security attribute of the area, determine whether an interrupt is required to be issued or not and whether an address and Identifier (ID) of the access request are required to be recorded or not.

10. The device according to claim 7, wherein the operation that the matching module judges whether the security type of the access request for accessing the target area, which is sent by the master equipment, is matched with the security attribute of the target area or not comprises that:
when the security attribute of the target area is an attribute in which access of a security type is supported and the access request sent by the master equipment is an access request of a security type, it is determined that the security type of the access request is matched with the security attribute of the target area; or
when the security attribute of the target area is an attribute in which access of a security type is supported and the access request sent by the master equipment is an access request of a non-security type, it is determined that the security type of the access request is mismatched with the security attribute of the target area; or
when the security attribute of the target area is an attribute in which access of a non-security type is supported and the access request sent by the master equipment is of a security type or a non-security type, it is determined that the security type of the access request is matched with the security attribute of the target area.

11. The device according to claim 10, further comprising an alarming module configured to, when the security type of the access request for accessing the target area, which is sent by the master equipment, is mismatched with the security attribute of the target area, generate error response information and send the error response information to the master equipment through the information forwarding module.

12. The device according to claim 9, further comprising an interrupt processing module configured to, when it is determined that the interrupt is required to be issued and the address and ID of the access request are required to be recorded when each of the one or more areas receives the access request of which the security type is mismatched with the security attribute of the area, and it is determined that the security type of the access request for accessing the target area, which is sent by the master equipment, is mismatched with the security attribute of the target area, issue an interrupt to the master equipment, and record an address and ID of the access request.

13. A computer storage medium comprising a set of instructions that when executed cause at least one processor to perform the Advanced eXtensible Interface (AXI)-protocol-based security access control method according to any one of claims 1 to 6.
